# DEMANDE DE BREVET EUROPEEN

(11) **EP 1 566 110 A1**
(43) Date de publication de la demande: **24.08.2005**
(21) Numéro de dépôt: 04003856.4
(22) Date de dépôt: 20.02.2004
(51) Int. Cl.: A44C 5/02

(54) **Bracelet à maillons en matériau rigide sur une âme flexible**

(71) Demandeur: Montres Rado S.A., 2543 Lengnau b. Biel (CH)
(72) Inventeur: Verdon, Christian, CH-1034 Boussens (CH); Bach, Michael, 2500 Biel (CH)
(74) Mandataire: Laurent, Jean

(57) **Abrégé**

Le bracelet (1) est formé de plusieurs maillons (2) juxtaposés en matériau rigide et d'une âme flexible (3) sur laquelle sont enfilés les maillons. L'âme flexible (3) est formée sur une partie de sa longueur d'éléments flexibles (4) assemblés de manière amovible les uns à la suite des autres. Chaque élément flexible comprend sur deux côtés opposés une première portion d'assemblage (7) et une seconde portion d'assemblage (6) complémentaire à la première portion d'assemblage. Les éléments peuvent être assemblés les uns à la suite des autres par emboîtement des première et seconde portions d'assemblage pour former une bande flexible. Les maillons (2) sont positionnés sur l'âme flexible pour maintenir les éléments flexibles dans leur position assemblée.

## Description

La présente invention concerne un bracelet à maillons en matériau rigide sur une âme flexible. Le bracelet est formé de plusieurs maillons juxtaposés en matériau rigide, qui sont enfilés sur une âme flexible, qui permet de donner au bracelet toute la flexibilité nécessaire pour qu'il puisse se courber. Le bracelet peut être par exemple un bracelet de montre à une ou deux branches, ou un bracelet traditionnel avec une branche et des parties d'un fermoir disposées chacune à une des extrémités de la branche du bracelet.

Les maillons en matériau rigide du bracelet servent comme élément décoratif rigide, mais également à rendre le bracelet plus résistant et plus solide. Le matériau rigide utilisé doit donc être choisi d'un type convenant à la peau, c'est-à-dire anallergique, et de haute résistance à l'abrasion.

Des bracelets comportant des maillons rigides montés sur une âme centrale dotée de portions d'articulations ont déjà été divulgués dans plusieurs documents de l'art antérieur. On peut citer à ce titre le document EP 0 030 705 qui décrit un bracelet articulé. Le bracelet est composé d'une chaîne d'éléments rigides de forme sensiblement parallélépipédique qui présentent chacun deux saillies transversales réalisées chacune sur deux faces opposées. Ces saillies de chaque élément sont de section droite en L ayant une orientation différente sur chaque face pour permettre aux éléments de s'agripper les uns à la suite des autres pour former une chaîne. Les éléments rigides sont recouverts de maillons rigides en forme de cadre pour maintenir les éléments rigides assemblés. Le bracelet est articulé au niveau des saillies des éléments rigides.

Un inconvénient d'un tel bracelet articulé, décrit dans le document EP 0 030 705, est qu'il est constitué d'éléments intérieurs rigides. Ceci nécessite une configuration particulière des éléments avec leurs saillies pour permettre une articulation du bracelet. De ce fait, l'épaisseur du bracelet est très importante, car les éléments intérieurs doivent être relativement épais avec leurs saillies afin de constituer une chaîne d'éléments et assurer une articulation du bracelet.

Dans le document CH 365 242, il est décrit un bracelet à éléments articulés. Ce bracelet est constitué d'une série de plaquettes rigides à bords opposés arrondis, qui sont accrochées les unes à la suite des autres, et de bagues rigides engagées sur la série de plaquettes accrochées. Ces bagues permettent de maintenir les plaquettes accrochées tout en autorisant une articulation du bracelet au niveau des bords arrondis des plaquettes.

Comme pour le précédent document, un inconvénient d'un tel bracelet, décrit dans le document CH 365 242, est que l'épaisseur des plaquettes rigides intérieures doit être importante pour la réalisation d'un bracelet articulé.

Pour réduire l'épaisseur du bracelet tout en assurant une bonne flexibilité du bracelet sans éléments articulés, le document FR 2 625 879 décrit un bracelet ayant une âme flexible. Cette âme flexible est sous la forme d'une bande sur laquelle des bagues en matériau rigide sont placés.

Cependant, un inconvénient d'un tel bracelet à âme flexible est qu'il est difficile d'adapter la taille du bracelet au poignet d'un utilisateur devant le porter. Pour pouvoir réduire la taille à la dimension souhaitée, il est nécessaire de se rendre dans un magasin spécialisé, car une ou plusieurs bagues doivent être retirées et l'âme flexible doit être découpée et rattachée à une pièce terminale.

Un autre inconvénient d'un tel bracelet à âme flexible est qu'une fois que l'âme flexible a été coupée pour ajuster la taille du bracelet à un porteur du bracelet, il n'est plus possible d'agrandir sa taille pour un autre porteur du bracelet.

La présente invention a donc pour but de pallier les inconvénients de l'art antérieur décrit ci-dessus en fournissant un bracelet de faible épaisseur qui comprend des maillons en matériau rigide sur une âme flexible, et dont la taille du bracelet peut être facilement ajustée.

A cet effet, la présente invention a pour objet un bracelet cité ci-devant qui se caractérise en ce que l'âme flexible est formée sur une partie de sa longueur d'éléments flexibles assemblés de manière amovible les uns à la suite des autres, et en ce que les maillons sont positionnés sur l'âme flexible pour maintenir les éléments flexibles dans leur position assemblée.

Un avantage du bracelet selon l'invention, est qu'il est facile d'ajuster la taille du bracelet en retirant ou en ajoutant au moins un élément flexible de l'âme flexible ainsi qu'un ou plusieurs maillons. Pour réduire la taille du bracelet en partant depuis une extrémité du bracelet, une pièce d'extrémité en prise avec le dernier élément flexible doit tout d'abord être retirée. Ensuite de quoi au moins le dernier maillon est retiré en le faisant glisser sur l'âme flexible du côté de son extrémité libre. En retirant ce dernier maillon qui recouvrait des portions assemblées de deux éléments flexibles adjacents, cela permet au dernier élément d'être désassemblé de l'élément auquel il était rattaché. Ces opérations peuvent être réalisées successivement ou en une fois pour le retrait de plusieurs maillons et éléments flexibles jusqu'à ajuster la taille du bracelet au poignet d'un utilisateur.

Avantageusement, chaque élément flexible comprend sur un côté une première portion d'assemblage et sur un côté opposé une seconde portion d'assemblage de forme complémentaire à la première portion d'assemblage. De cette manière, les éléments peuvent être assemblés les uns à la suite des autres en emboîtant leurs portions complémentaires d'assemblage. Une fois, que les éléments flexibles de l'âme flexible sont assemblés, l'âme flexible forme une bande flexible d'épaisseur uniforme sur la majeure partie de sa longueur. Bien entendu, uniquement une partie de l'âme flexible peut être composée d'éléments flexibles de taille égale, car l'ajustement de la taille du bracelet ne se fait pas sur toute la longueur du bracelet.

Avantageusement, la première portion d'assemblage de chaque élément flexible peut avoir une forme de T ou en queue d'aronde, alors que la seconde portion d'assemblage a une ouverture en forme de T ou en queue d'aronde complémentaire à la première portion d'assemblage.

Avantageusement, l'âme flexible est réalisée en un matériau à mémoire de forme pour ses qualités de super-élasticité. Ce matériau à mémoire de forme peut être un alliage métallique composé de titane et de nickel, ou un matériau composite plastique. L'épaisseur de l'âme flexible peut être inférieure à 1 mm, de préférence égale à 0,4 mm. L'âme réalisée avec ce matériau peut ainsi supporter des efforts de traction ou de torsion importants sans rupture tout en assurant une bonne flexibilité au bracelet. Grâce à ce matériau super-élastique à mémoire de forme de l'âme flexible, il est possible de donner une forme au repos à l'âme correspondant à la forme du poignet par un traitement thermique. De plus avec ce matériau super-élastique, l'élasticité peut être plus de quatre fois supérieure à celle d'un acier à ressort.

Avantageusement, les maillons en matériau rigide peuvent être en céramique, en cermet ou en métal dur avec une épaisseur inférieure à 3 mm, de préférence voisine de 2 mm. De cette manière, le bracelet peut être réalisé à faible épaisseur tout en lui conférant une haute résistance et sécurité à la rupture. De plus, le matériau des maillons est choisi pour être anallergique et biocompatible.

Comme les différentes parties composant le bracelet sont faciles à réaliser et que l'ajustement de la taille du bracelet peut être facilement réalisé, les coûts sont réduits.

Les buts, avantages et caractéristiques du bracelet à maillons rigides sur une âme flexible apparaîtront mieux dans la description suivante de formes d'exécution de l'invention non limitatives en liaison avec les dessins dans lesquels :
Les figures 1a et 1b représentent une vue de dessus et une vue en coupe selon la ligne I-I de la figure 1a d'une première forme d'exécution d'une partie du bracelet assemblé selon l'invention,
les figures 2a et 2b représentent une vue de dessus et une vue en coupe selon la ligne II-II de la figure 2a de la première forme d'exécution d'une partie du bracelet selon l'invention, qui expliquent la manière d'ajuster la taille du bracelet,
les figures 3a et 3b représentent une vue en coupe longitudinale d'une partie du bracelet dans une position rectiligne et dans une position courbée avec une variante de réalisation des maillons du bracelet selon l'invention, et
les figures 4a et 4b représentent une vue de dessus et une vue en coupe selon la ligne III-III de la figure 4a d'une seconde forme d'exécution d'une partie du bracelet selon l'invention, qui expliquent la manière d'ajuster la taille du bracelet.

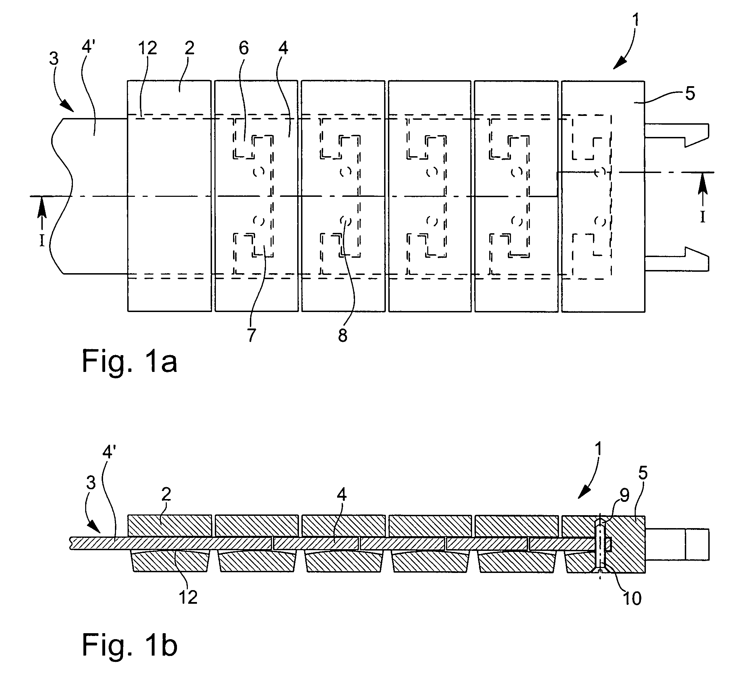

En référence aux figures 1a et 1b, une partie d'une branche du bracelet 1 dans une position assemblée est représentée de manière simplifiée. Le bracelet 1 comprend une âme flexible 3 sur laquelle sont enfilés plusieurs maillons en matériau rigide 2, et une pièce terminale 5 fixée à une extrémité de l'âme flexible. La pièce terminale 5 peut être une partie d'un fermoir, comme représenté, ou une partie de liaison à une boîte de montre non représentée. L'autre extrémité de l'âme flexible, non représentée, peut soit être fixée de manière traditionnelle à une boîte de montre, soit être fixée à une autre pièce terminale servant de partie complémentaire à la pièce terminale 5.

L'âme flexible 3 est composée d'une première partie flexible 4', et de plusieurs éléments flexibles 4 qui sont assemblés les uns à la suite des autres depuis la première partie flexible pour former une bande flexible. Les éléments flexibles 4 peuvent être de dimension égale ou différente en fonction également de la dimension des maillons 2 qui les recouvrent.

Chaque élément flexible 4 comprend, vu dans le sens de la longueur du bracelet, un premier côté avec une première portion d'assemblage 6, et un second côté avec une seconde portion d'assemblage 7 complémentaire à la première portion d'assemblage. De cette façon, les éléments flexibles 4 peuvent être assemblés de manière amovible les uns à la suite des autres par emboîtement de leurs portions d'assemblage correspondantes. Les portions d'assemblage peuvent être configurées de manière à assurer un maintien provisoire par frottement des parties en contact lors de l'emboîtement des portions complémentaires.

La première partie flexible doit donc avoir également à une extrémité une portion d'assemblage à partir de laquelle les éléments flexibles 4 sont assemblés pour former une bande. Avec cette manière d'assembler les éléments flexibles, la bande est avantageusement d'épaisseur uniforme sur la majeure partie de la longueur de l'âme flexible 3. Cette épaisseur de l'âme flexible peut être inférieure à 1 mm, de préférence voisine de 0,4 mm.

La première portion d'assemblage 7 de chaque élément flexible 4 peut avoir la forme d'un T, alors que la seconde portion d'assemblage 6 est une ouverture en forme de T complémentaire à la première portion d'assemblage 7. La première portion d'assemblage 7 d'un élément flexible 4 peut ainsi être emboîtée dans la seconde portion d'assemblage 6 d'un élément flexible adjacent. En répétant, ces opérations avec plusieurs autres éléments, une bande flexible constituant l'âme flexible est obtenue.

Bien entendu, les portions d'assemblage peuvent être réalisées avec d'autres formes, notamment avec une des portions d'assemblage comprenant au moins une tête et un bras reliant la tête à la partie centrale de chaque élément flexible. La largeur de la tête est bien entendu plus grande que la largeur du bras pour assurer un maintien longitudinal de chaque élément assemblé. Cette tête peut décrire une portion de cercle de diamètre supérieur à la largeur du bras la reliant à la partie centrale de chaque élément. L'autre portion d'assemblage doit donc être une ouverture circulaire complémentaire dans l'élément flexible.

Le matériau utilisé pour réaliser l'âme flexible peut être un matériau à mémoire de forme, tel qu'un alliage métallique composé de titane et de nickel, ou un matériau composite plastique. Ce matériau doit avoir la faculté d'être anallergique et biocompatible tout en assurant la flexibilité nécessaire du bracelet pour lui permettre de facilement se courber. Il est ainsi facile de fabriquer plusieurs éléments flexibles notamment par étampage dans plusieurs plaques ou feuilles d'un tel matériau.

Pour maintenir les éléments flexibles 4 dans une position assemblée, ils sont recouverts par des maillons 2 en matériau rigide représentés de forme générale sensiblement parallélépipédique. Ces maillons 2 forment des bagues avec une ouverture longitudinale 12 de dimension suffisante pour permettre aux maillons d'être enfilés et glissés sur l'âme flexible. L'ouverture longitudinale 12 a une surface inférieure légèrement courbée pour permettre un débattement vertical des éléments flexibles lors d'une flexion du bracelet. De plus, la partie inférieure de chaque maillon a une forme pyramidale tronquée pour pouvoir courber le bracelet par flexion de l'âme flexible.

Les maillons sont avantageusement réalisés en céramique, en cermet, en métaux durs, voire en bois avec une épaisseur inférieure à 3 mm, de préférence égale à 2 mm.

Les maillons 2 peuvent être enfilés successivement sur l'âme flexible depuis une première extrémité de l'âme jusqu'à l'autre extrémité de l'âme flexible une fois que les éléments flexibles ont été assemblés, ou au fur et à mesure que les éléments sont successivement assemblés. L'ouverture longitudinale 12 de chaque maillon a une largeur légèrement supérieure à la largeur maximale de chaque élément flexible, et une hauteur inférieure au double de l'épaisseur de chaque élément flexible 4. De préférence, la hauteur minimale de l'ouverture est légèrement supérieure à l'épaisseur de chaque élément flexible 4. De cette manière, les maillons peuvent glisser facilement sur l'âme flexible.

Une fois que les maillons 2 sont tous montés sur l'âme flexible 3 entre chaque extrémité de l'âme flexible 3, ils sont positionnés de manière que chaque zone des portions d'assemblage des éléments assemblés soit recouverte intégralement par un des maillons. De ce fait, cela permet de maintenir tous les éléments flexibles de l'âme flexible dans une position assemblée. Le positionnement des maillons 2 sur l'âme flexible 3 peut être assurée notamment par la pièce terminale 5, une fois que cette pièce terminale 5 est fixée à la dernière portion d'assemblage du dernier élément 4 ou de la première partie flexible 4'.

Pour la fixation de la pièce terminale 5 selon cette première forme d'exécution des figures 1a et 1b, la première portion d'assemblage 7 de chaque élément 4 et de la première partie 4' comprennent une ou deux ouvertures 8. La pièce terminale 5 comprend un ou deux trous borgnes 9 disposés dans une direction perpendiculaire par rapport à la longueur du bracelet. Une ou deux tiges 10 sont montées dans chaque trou borgne 9 en traversant la ou les ouvertures 8 du dernier élément flexible 4 ou de la première partie flexible 4'.

Les trous borgnes 9 peuvent être taraudés, et les deux tiges 10 peuvent être des vis qui sont vissées chacune dans un des trous 9. Bien entendu, les vis de fixation de la pièce terminale sont situées du côté du bracelet venant en contact du poignet du porteur du bracelet afin de les dissimuler.

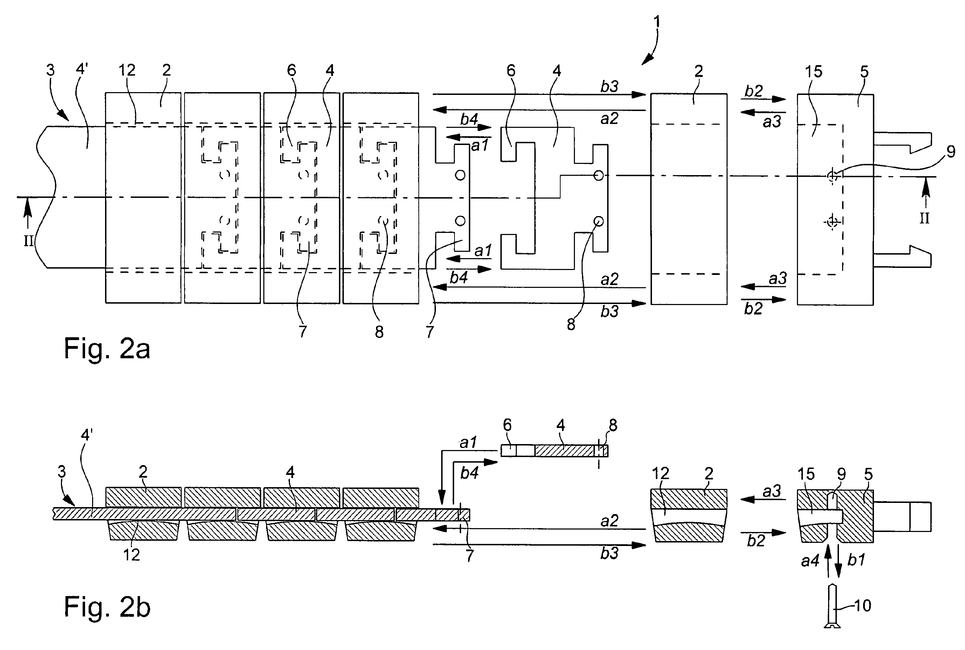

En référence aux figures 2a et 2b relative à la première forme d'exécution du bracelet, la manière d'ajuster la taille du bracelet 1 est expliquée. Il est à noter que tous les mêmes éléments du bracelet décrits ci-après portent des signes de référence identiques à ceux décrits en référence aux figures 1a et 1b. De ce fait, il ne sera pas répété la description de tous ces éléments.

Pour simplifier l'explication relative à l'ajustement de la taille du bracelet, il n'est fait référence qu'à l'ajout ou au retrait d'un élément flexible 4 et d'un maillon 2 correspondant. Bien entendu par équivalence, l'ajout ou le retrait de plusieurs éléments et maillons peut être réalisé de la même manière.

Pour agrandir la taille du bracelet, il est tout d'abord retiré la pièce terminale 5 de la première portion d'assemblage 7 du dernier élément flexible 4. Ensuite de quoi à l'étape a1, la seconde portion d'assemblage 6 d'un élément flexible supplémentaire 4 est emboîtée dans la première portion d'assemblage 7 du dernier élément de l'âme flexible 3. Après avoir assemblé ce nouvel élément flexible 4, un nouveau maillon 2 est enfilé sur l'âme jusqu'à venir en contact du dernier précédent maillon du bracelet 1 à l'étape a2.

Une fois que le nouveau maillon 2 est positionné sur l'âme flexible, la première portion d'assemblage 7 de l'élément supplémentaire reste découverte afin de venir enfiler la pièce terminale à l'étape a3. Dès que la pièce terminale 5 est placée à l'extrémité de l'âme flexible sur la première portion d'assemblage de l'élément supplémentaire 4, les vis de fixation 10 sont vissées dans les trous taraudés 9 en passant par les deux ouvertures 8 à l'étape a4. Ainsi, la taille du bracelet a été ajustée avec un élément et un maillon supplémentaires.

Pour réduire la taille du bracelet, les vis de fixation 10 sont tout d'abord dévissées et retirées des trous borgnes 9 à l'étape b1, puis la pièce terminale 5 est retirée de l'âme flexible à l'étape b2. Après cela, il est nécessaire de faire glisser le dernier maillon 2 afin de le retirer de l'âme flexible à l'étape b3. Finalement le dernier élément flexible 4 peut être retiré en déboîtant sa seconde portion d'assemblage 6 de la première portion d'assemblage 7 de l'élément adjacent à l'étape b4. Une fois opéré le retrait d'un élément et d'un maillon du bracelet, la pièce terminale 5 est fixée à la première portion d'assemblage du dernier élément de l'âme flexible.

On comprend par ces différentes étapes expliquées ci-dessus qu'il est très facile d'ajuster la taille du bracelet au poignet de tout porteur dudit bracelet sans qu'il soit nécessaire de se rendre dans un magasin spécialisé à cet effet.

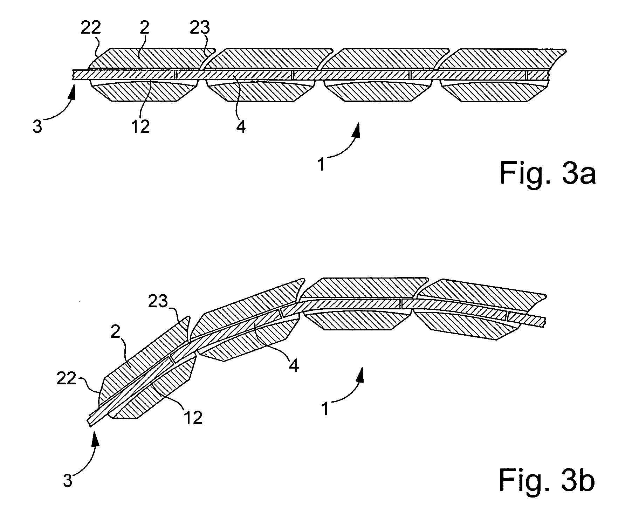

Pour illustrer la flexibilité du bracelet composé de l'âme flexible et de plusieurs maillons en matériau rigide, on peut se reporter aux figures 3a et 3b qui représentent une partie du bracelet dans une position rectiligne et dans une position courbée. Comme précédemment les mêmes éléments du bracelet décrits ci-après portent des signes de référence identiques et ne seront pas expliqués en détail.

La forme des maillons montrés dans ces figures 3a et 3b est légèrement différente de celle présentée dans les figures 1a et 1b notamment en ce qui concerne leur partie supérieure. On peut remarquer que chaque maillon possède une première portion convexe arrondie 22 dans la partie supérieure sur une première face et une seconde portion concave arrondie 23 sur une seconde face opposée. Ainsi par juxtaposition des maillons 2 sur l'âme flexible 3, la première portion convexe 22 d'un maillon vient à l'intérieur de la seconde portion concave d'un maillon adjacent.

En courbant le bracelet 1 comme montré à la figure 3b, il est constaté une flexion des éléments flexibles 4 de l'âme flexible qui peuvent bouger verticalement dans l'ouverture longitudinale 12. Grâce à cette âme flexible 3 et sans l'emploi de goupilles d'articulation, il est possible de courber facilement ledit bracelet.

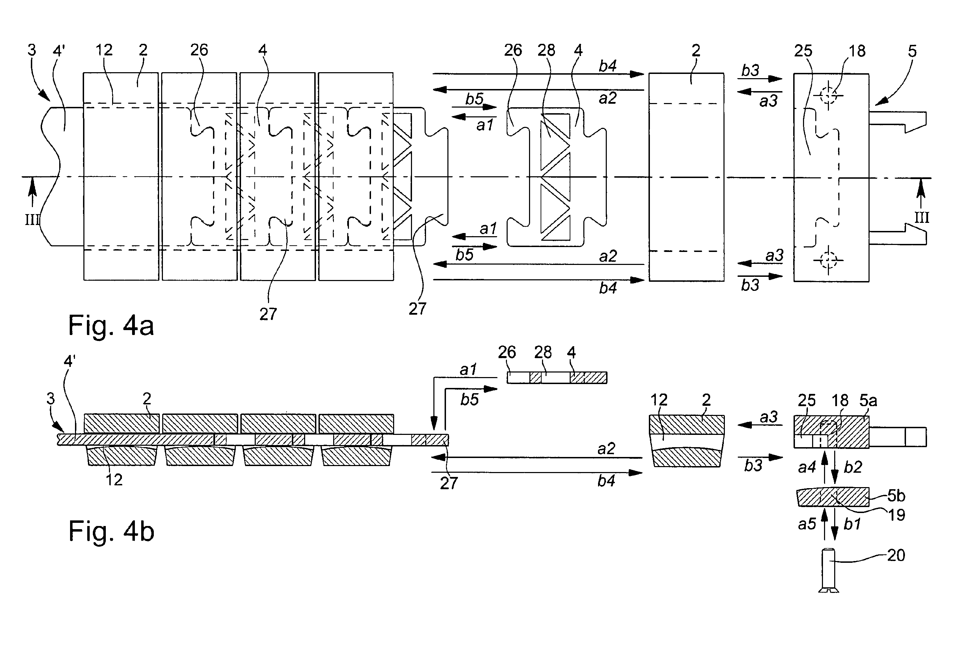

En référence aux figures 4a et 4b relative à une seconde forme d'exécution du bracelet, la manière d'ajuster la taille du bracelet 1 est expliquée. Il est à noter que tous les mêmes éléments du bracelet décrits ci-après portent des signes de référence identiques à ceux décrits en référence aux figures 1a et 1b, à l'exception des portions d'assemblage qui diffèrent de ceux précédemment décrits. De ce fait, il ne sera pas répété la description de tous les éléments déjà décrits.

Pour simplifier l'explication relative à l'ajustement de la taille du bracelet, il n'est fait référence qu'à l'ajout ou au retrait d'un élément flexible 4 et d'un maillon 2 correspondant comme pour la première forme d'exécution des figures 2a et 2b. Bien entendu par équivalence, l'ajout ou le retrait de plusieurs éléments et maillons peut être réalisé de la même manière.

La première portion d'assemblage 27 est de forme trapézoïdale ou en queue d'aronde en vue de dessus et la seconde portion d'assemblage 26 est une ouverture de forme trapézoïdale ou en queue d'aronde complémentaire à la première portion. Il est également pratiqué dans une partie centrale de certains éléments, des ouvertures 28 afin de pouvoir ajuster la force de rappel du bracelet en flexion. Toutefois, il aurait pu également être imaginé de réduire par endroit l'épaisseur de chaque élément flexible, ce qui peut être défavorable car l'épaisseur générale de l'âme flexible est déjà fortement réduite.

Dans cette seconde forme d'exécution, il est à noter que la pièce terminale 5 est composée d'une première partie 5a et d'une seconde partie 5b. La seconde partie 5b est fixée à la première partie 5a à l'aide de deux vis 20 passant dans des trous 19 de la seconde partie 5b et vissées chacune dans un taraudage correspondant 18 de la première partie 5a.

Une fois que la seconde partie 5b est fixée à la première partie 5a, la pièce terminale 5 comprend un logement 25 de forme complémentaire à la première portion d'assemblage 27 d'un élément flexible. De ce fait, il n'est plus nécessaire de prévoir des ouvertures de fixation dans chaque élément et dans la première partie flexible 4' de l'âme flexible, car la première portion d'assemblage vient se loger dans le logement 25 de la pièce terminale.

Pour agrandir la taille du bracelet, il est tout d'abord retirer la pièce terminale 5 de la première portion d'assemblage 27 du dernier élément flexible 4. Ensuite de quoi à l'étape a1, la seconde portion d'assemblage 26 d'un élément flexible supplémentaire 4 est emboîtée dans la première portion d'assemblage 27 du dernier élément de l'âme flexible 3. Après avoir assemblé ce nouvel élément flexible 4, un nouveau maillon 2 est enfilé sur l'âme jusqu'à venir en contact du dernier précédent maillon du bracelet 1 à l'étape a2.

Une fois que le nouveau maillon 2 est positionné sur l'âme flexible 3, la première portion d'assemblage 27 de l'élément supplémentaire reste découverte afin de pouvoir le loger dans le logement 25 de la première partie 5a de la pièce terminale 5 à l'étape a3. Dès que la première partie 5a de la pièce terminale 5 est placée à l'extrémité de l'âme flexible sur la première portion d'assemblage de l'élément supplémentaire 4, la seconde partie 5b est appliquée contre la première partie 5a à l'étape a4. Finalement, les vis de fixation 20 sont vissées dans les trous taraudés 18 à l'étape a5. Ainsi, la taille du bracelet a été ajustée avec un élément et un maillon supplémentaires.

Pour réduire la taille du bracelet, les vis de fixation 20 sont tout d'abord dévissées et retirées des trous borgnes taraudés à l'étape b1, puis la seconde partie 5b de la pièce terminale 5 est retirée à l'étape b2. Après cela, la première partie 5a de la pièce terminale est enlevée de la première portion d'assemblage du dernier élément 4 à l'étape b3. Le dernier maillon 2 est retiré en le faisant glisser sur l'âme flexible à l'étape b4. Finalement le dernier élément flexible 4 peut être retiré en déboîtant sa seconde portion d'assemblage 26 de la première portion d'assemblage 27 de l'élément adjacent à l'étape b5. Une fois opéré le retrait d'un élément et d'un maillon du bracelet, la pièce d'extrémité 5 est fixée à la première portion d'assemblage du dernier élément de l'âme flexible.

Il est à noter que la pièce terminale 5 peut très bien avoir la première partie 5a articulée à l'aide d'une charnière non représentée à la seconde partie 5b, et d'autres moyens de fixation de la seconde partie 5b à la première partie 5a. Cette pièce terminale peut également être composée d'un mécanisme à pince.

A partir de la description qui vient d'être faite de multiples variantes de réalisation du bracelet peuvent être conçues par l'homme du métier sans sortir du cadre de l'invention définie par les revendications. Il peut être prévu que chaque maillon soit sous la forme d'un C avec les extrémités du C recourbées pour pouvoir permettre de glisser les maillons sur l'âme flexible et permettre de maintenir les éléments assemblés. Des parties ajourées peuvent être prévues sur les côtés latéraux des éléments flexibles pour augmenter la flexibilité transversale du bracelet. La pièce terminale peut être configurée pour être fixée à une seconde portion d'assemblage d'un élément ou de la première partie de l'âme flexible plutôt qu'à une première portion d'assemblage comme décrit ci-devant. Finalement, il peut être prévu dans l'ouverture de chaque maillon et sur les côtés des éléments flexibles des butées pour assurer le positionnement de chaque maillon venant s'appuyer contre une butée des éléments assemblés à recouvrir.

## Revendications

1. Bracelet (1) formé de plusieurs maillons (2) juxtaposés en matériau rigide et d'une âme flexible (3) sur laquelle sont enfilés les maillons, **caractérisé en ce que** l'âme flexible est formée sur une partie de sa longueur d'éléments flexibles (4) assemblés de manière amovible les uns à la suite des autres, et **en ce que** les maillons sont positionnés sur l'âme flexible pour maintenir les éléments flexibles dans leur position assemblée.

2. Bracelet (1) selon la revendication 1, **caractérisé en ce que** les éléments flexibles (4) dans le sens de la longueur de l'âme flexible (3) comprennent chacun sur deux côtés opposés une première portion d'assemblage (7, 27) et une seconde portion d'assemblage (6, 26) complémentaire à la première portion d'assemblage de manière à assembler les éléments les uns à la suite des autres par emboîtement des première et seconde portions d'assemblage.

3. Bracelet (1) selon l'une des revendications 1 et 2, **caractérisé en ce que** l'âme flexible (3) avec les éléments (4) assemblés les uns à la suite des autres forment une bande flexible d'épaisseur uniforme sur la majeure partie de la longueur de l'âme.

4. Bracelet (1) selon la revendication 3, **caractérisé en ce qu'**une des portions d'assemblage (7, 27) d'un élément flexible est de forme un T ou de forme trapézoïdale ou en queue d'aronde pour pouvoir être emboîtée dans une des portions d'assemblage (6, 26) complémentaire d'un autre élément flexible adjacent.

5. Bracelet (1) selon l'une des revendications 2 à 4, **caractérisé en ce que** les maillons (2) en matériau rigide sont de forme tubulaire avec une ouverture longitudinale (12) de largeur sensiblement équivalente à la largeur des éléments flexibles (4) et de hauteur inférieure au double de l'épaisseur des éléments flexibles, et **en ce que** les maillons sont positionnés sur l'âme flexible (3) pour que les portions emboîtées (6, 7; 26, 27) de deux éléments flexibles adjacents soient entièrement recouvertes par un des maillons pour maintenir les éléments dans une position assemblée.

6. Bracelet (1) selon l'une des revendications précédentes, **caractérisé en ce que** l'âme flexible (3) sous la forme d'une bande est constituée d'un matériau super-élastique, tel qu'un matériau à mémoire de forme d'épaisseur inférieure à 1 mm, de préférence voisine de 0,4 mm.

7. Bracelet (1) selon la revendication 6, **caractérisé en ce que** le matériau à mémoire de forme est un alliage métallique composé de titane et de nickel, ou un matériau composite plastique.

8. Bracelet (1) selon l'une des revendications précédentes, **caractérisé en ce que** les maillons (2) sont réalisés en céramique, en cermet ou en métaux durs, et **en ce que** l'épaisseur des maillons est inférieure à 3 mm, de préférence voisine de 2 mm.

9. Bracelet (1) selon la revendication 2, **caractérisé en ce que** les éléments flexibles (4) comprennent à travers une des portions d'assemblage (7, 27) au moins une ouverture (8) pour permettre, à travers l'ouverture du dernier élément flexible à une extrémité de l'âme le passage d'une tige de fixation (9) d'une pièce terminale (5) correspondant à un dernier maillon, cette pièce terminale fixée au dernier élément flexible assurant le positionnement sur l'âme flexible des maillons du bracelet.

10. Bracelet (1) selon la revendication 2, **caractérisé en ce qu'**une pièce terminale (5) correspondant à un dernier maillon d'une des extrémités du bracelet est fixée à une des portions d'assemblage (7, 27) libre du dernier élément flexible (4), la portion d'assemblage libre étant maintenue dans un logement (25) de forme complémentaire de la pièce terminale.
